# FASCICULE DE BREVET EUROPEEN

(11) **EP 1 682 361 B1**
(45) Date de publication et mention de la délivrance du brevet: **09.05.2007**
(21) Numéro de dépôt: 04818115.0
(22) Date de dépôt: 29.10.2004
(51) Int. Cl.: B60C 1/00, B60C 11/00

(54) **BANDE DE ROULEMENT AYANT DES ELEMENTS DE SCULPTURE RECOUVERTS D'UN MELANGE SPECIFIQUE**
LAUFFLÄCHE MIT DURCH EIN SPEZIFISCHES GEMISCH BEDECKTEN PROFILELEMENTEN
TREAD COMPRISING RELIEF ELEMENTS COVERED BY A SPECIFIC MIXTURE

(30) Priorité: 30.10.2003 FR 0312742
(43) Date de publication de la demande: 26.07.2006
(73) Titulaire: Société de Technologie Michelin, 63000 Clermont-Ferrand Cedex 09 (FR); MICHELIN Recherche et Technique S.A., 1763 Granges-Paccot (CH)
(72) Inventeur: CHASSAGNON, Robert, F-63200 Riom (FR); VASSEUR, Didier, 63100 Clermont-Ferrand (FR)
(74) Mandataire: Diernaz, Christian
(86) Numéro de dépôt international: PCT/EP2004/012238
(87) Numéro de publication internationale: WO 2005/044593

(56) Documents cités:
- EP-A- 0 837 096
- EP-A- 1 228 898
- EP-A- 1 228 902
- DE-B- 1 194 721
- PATENT ABSTRACTS OF JAPAN vol. 014, no. 206 (M-0967), 26 avril 1990 (1990-04-26) -& JP 02 045202 A (SUMITOMO RUBBER IND LTD), 15 février 1990 (1990-02-15)
- PATENT ABSTRACTS OF JAPAN vol. 007, no. 112 (M-215), 17 mai 1983 (1983-05-17) -& JP 58 033504 A (SUMITOMO GOMU KOGYO KK), 26 février 1983 (1983-02-26)

## Description

L'invention concerne des pneumatiques et plus particulièrement la bande de roulement de tels pneumatiques.

Pour obtenir des performances satisfaisantes en roulage notamment sur chaussée mouillée, il est connu de pourvoir une bande de roulement d'un pneumatique avec une sculpture formée par des éléments de sculpture séparés les uns des autres par des découpures (rainures de largeur moyenne supérieure ou égale à 2.5 mm et/ou incisions de largeur moyenne inférieure à 2.5 mm), ces découpures étant obtenues par exemple par moulage. Les éléments de sculpture ainsi formés comprennent une face de contact destinée à venir en contact avec la chaussée pendant le roulage et des faces latérales délimitant également les découpures ; l'intersection de chaque face latérale avec la face de contact forme une arête facilitant le contact du pneumatique avec la chaussée et notamment lorsque celle-ci est mouillée. Plus généralement, on définit une arête comme la limite géométrique de contact d'un élément de sculpture avec le sol en roulage.

Par éléments de sculpture, on distingue des éléments ne faisant pas le tour complet du pneumatique (blocs) et des éléments faisant le tour complet (nervures). Par ailleurs, les éléments de sculpture peuvent comporter une ou plusieurs incisions pour former des arêtes supplémentaires, chaque incision pouvant ou non déboucher sur au moins une face latérale de l'élément de sculpture. Par définition, une incision est l'espace délimité par deux faces principales en vis-à-vis distantes l'une de l'autre d'une largeur inférieure à 2.5 mm.

Pour améliorer l'adhérence du pneumatique sur une chaussée humide, il est connu que la nature même du mélange de caoutchouc (ou encore appelée : composition de caoutchouc) composant la bande de roulement a une incidence notable. Ainsi, une bande de roulement d'un pneumatique en mélange de caoutchouc ayant une meilleure adhérence sur sol mouillé permet d'obtenir des performances améliorées en roulage dans des conditions de sol mouillé. Toutefois, en parallèle à cette amélioration de performance en adhérence sur sol mouillé, il se produit en règle générale une perte de performance en usure sur route sèche, ce qui se traduit par une durée de vie sur usure réduite et nécessite un changement plus fréquent des pneumatiques sur un véhicule.

Il est connu par le document EP1 228 898 de réaliser une bande de roulement en mélange de caoutchouc de couleur noire comportant au moins dans les rainures un mélange de couleur non noire, ce dernier étant exempt de noir de carbone.

En conséquence, le besoin existe d'un pneumatique dont la bande de roulement conserve une bonne performance en durée de vie sur usure tout en améliorant sensiblement la performance d'adhérence sur sol mouillé.

Dans ce but, il est proposé une bande de roulement en caoutchouc comprenant :
- une pluralité d'éléments de relief (nervure et/ou bloc) comprenant au moins une face latérale et une face de contact destinée à être en contact suivant une surface de contact avec la chaussée pendant le roulage d'un pneumatique pourvu de ladite bande, la limite de la surface de contact de la face de contact avec le sol formant au moins une arête,
- une pluralité de découpures sous la forme de rainure et/ou incision, lesdites découpures étant délimitées par des faces latérales en vis-à-vis,
- chaque élément de sculpture étant formé principalement avec au moins un premier mélange de caoutchouc (dit "mélange de base"),
cette bande de roulement étant par ailleurs caractérisée en ce que, vue en coupe dans un plan contenant l'épaisseur de cette bande, au moins une face de hauteur H délimitant au moins une découpure est recouverte au moins en partie avec un deuxième mélange de caoutchouc, dit "mélange de recouvrement", cette partie en mélange de recouvrement s'étendant sur une hauteur Hr au moins égale à 30% de la hauteur H de la face, au moins un mélange de base débouche sur la face de contact à l'état neuf ou au plus tard après une usure au plus égale à 10% de la hauteur Hr, ledit mélange de recouvrement comportant un caoutchouc butyl, et en ce que le mélange de recouvrement comporte à titre d'agent plastifiant un composé du type ester d'acide gras insaturé en C₁₂-C₂₂.

Préférentiellement, le mélange de recouvrement comporte, à titre d'agent plastifiant, un composé du type ester d'acide gras insaturé en C₁₂-C₂₂, selon un taux compris par exemple entre 5 et 80 pce, en particulier entre 10 et 50 pce, dépendant du mélange de recouvrement particulier considéré, notamment de son taux de charge inorganique. Il a été constaté que cette combinaison permettait d'atteindre de bonnes performance d'adhérence en roulage sur un sol humide avec un pneumatique pourvu d'une bande de roulement selon l'invention.

La composition de caoutchouc constituant le mélange de recouvrement a pour caractéristique de comporter un caoutchouc butyl. Par caoutchouc butyl, on entend de manière connue un copolymère d'isobutylène et d'isoprène (en abrégé IIR), ainsi que les versions halogénées, en particulier chlorées ou bromées, de ce type de copolymère.

Il a été constaté, de manière surprenante, que la présence de caoutchouc butyl dans le mélange de recouvrement sur les faces limitant les découpures (c'est-à-dire les faces latérales d'un ou plusieurs éléments de relief de la bande de roulement) conduisait à une augmentation très sensible de l'adhérence globale sur route mouillée d'une bande de roulement, sans pour autant pénaliser notablement la résistance à l'usure de cette dernière, assurée essentiellement par le mélange de base.

Pour cette raison, le mélange de recouvrement comporte plus de 15 pce (parties en poids pour cent parties d'élastomère), et plus préférentiellement encore de plus de 30 pce de caoutchouc butyl. Le caoutchouc butyl peut constituer l'élastomère diénique majoritaire du mélange de recouvrement, par exemple être présent selon un taux de 50 à 100 pce. L'homme du métier saura ajuster ce taux de caoutchouc butyl, à la lumière de la présente description, en fonction du mode particulier de réalisation de l'invention et notamment du type de pneumatique considéré.

La composition de caoutchouc formant le mélange de recouvrement peut comporter, outre le caoutchouc butyl, un autre élastomère diénique tel que défini ci-après pour le mélange de base.

Par élastomère (ou caoutchouc) "diénique", on entend de manière connue un élastomère issu au moins en partie (i.e. un homopolymère ou un copolymère) de monomères diènes (monomères porteurs de deux doubles liaisons carbone-carbone, conjuguées ou non). Ces élastomères diéniques peuvent être classés dans deux catégories : "essentiellement insaturés" ou "essentiellement saturés".

On entend en général par "essentiellement insaturé", un élastomère diénique issu au moins en partie de monomères diènes conjugués, ayant un taux de motifs ou unités d'origine diénique (diènes conjugués) qui est supérieur à 15% (% en moles). C'est ainsi, par exemple, que les caoutchoucs butyl ou copolymères de diènes et d'alpha-oléfines type EPDM n'entrent pas dans la définition précédente et peuvent être qualifiés d'élastomères diéniques "essentiellement saturés" (taux de motifs d'origine diénique faible ou très faible, toujours inférieur à 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Ces définitions étant données, on entend plus particulièrement par élastomère diénique susceptible d'être mis en oeuvre dans le mélange de base (et le cas échéant dans le mélange de recouvrement en plus du caoutchouc butyl) :
(a) tout homopolymère obtenu par polymérisation d'un monomère diène conjugué ayant de 4 à 12 atomes de carbone;
(b) tout copolymère obtenu par copolymérisation d'un ou plusieurs diènes conjugués entre eux ou avec un ou plusieurs composés vinyle aromatique ayant de 8 à 20 atomes de carbone ;
(c) un copolymère ternaire obtenu par copolymérisation d'éthylène, d'une α-oléfine ayant 3 à 6 atomes de carbone avec un monomère diène non conjugué ayant de 6 à 12 atomes de carbone, comme par exemple les élastomères obtenus à partir d'éthylène, de propylène avec un monomère diène non conjugué du type précité tel que notamment l'hexadiène-1,4, l'éthylidène norbornène, le dicyclopentadiène.

Selon un mode préférentiel de l'invention, l'élastomère diénique autre que caoutchouc butyl est choisi dans le groupe constitué par les polybutadiènes (BR), les polyisoprènes (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

En particulier, lorsque la bande de roulement est par exemple destinée à un pneumatique pour véhicule de type tourisme, l'élastomère diénique du mélange de base est majoritairement (c'est-à-dire pour plus de 50 pce) un SBR, qu'il s'agisse d'un SBR préparé en émulsion ("ESBR") ou d'un SBR préparé en solution ("SSBR"), ou un coupage (mélange) SBR/BR, SBR/NR (ou SBR/IR), ou encore BR/NR (ou BR/IR). Dans le cas d'un élastomère SBR, on utilise notamment un SBR ayant une teneur en styrène comprise entre 20% et 30% en poids, une teneur en liaisons vinyliques de la partie butadiénique comprise entre 15% et 65%, une teneur en liaisons trans-1,4 comprise entre 15% et 75% et une Tg (température de transition vitreuse mesurée selon ASTM D3418-82) comprise entre -20°C et -55°C; un tel SBR peut être avantageusement utilisé en mélange avec un BR possédant de préférence plus de 90% de liaisons cis-1,4.

Selon un autre mode de réalisation particulièrement préférentiel, l'élastomère diénique autre que caoutchouc butyl est majoritairement (pour plus de 50 pce) un élastomère isoprénique, en particulier lorsque la bande de roulement de l'invention est destinée à un pneumatique pour véhicule industriel tel que poids-lourd. Par "élastomère isoprénique", on entend de manière connue un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. Parmi les copolymères d'isoprène, on citera en particulier les copolymères d'isoprène-styrène (SIR), d'isoprène-butadiène (BIR) ou d'isoprène-butadiène-styrène (SBIR). En particulier, cet élastomère isoprénique est de préférence du caoutchouc naturel ou un polyisoprène cis-1,4 de synthèse; parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Bien entendu, le mélange de base pourrait, lui aussi, comporter une fraction minoritaire de caoutchouc butyl. Toutefois et de préférence, le mélange de base est dépourvu de caoutchouc butyl.

Mélange de base et mélange de recouvrement comportent d'autre part une charge renforçante, par exemple du noir de carbone ou une charge inorganique renforçante à laquelle est alors associé un agent de couplage, le taux de charge renforçante total étant par exemple compris entre 30 et 150 pce, de préférence entre 40 et 130 pce.

Comme noirs de carbone conviennent tous les noirs de carbone, notamment les noirs du type HAF, ISAF et SAF, connus de l'homme du métier et conventionnellement utilisés dans les bandes de roulement de pneumatiques, par exemple les noirs de carbone renforçants des séries (grades ASTM) 100, 200 ou 300 typiquement utilisés dans les bandes de roulement de ces pneumatiques (par exemple N115, N134, N234, N326, N330, N339, N347, N375).

Selon un mode particulièrement préférentiel de réalisation de l'invention, mélange de base et mélange de recouvrement comportent tous deux une charge inorganique à titre de charge renforçante, ainsi qu'un agent de couplage assurant de manière connue la liaison ou couplage entre la charge inorganique et l'élastomère. Cette charge inorganique renforçante est de préférence majoritaire, c'est-à-dire qu'elle représente dans les deux types de mélange plus de 50% en poids de la charge renforçante totale utilisée.

Par "charge inorganique renforçante", doit être entendue ici, de manière connue, toute charge inorganique ou minérale, quelles que soient sa couleur et son origine (naturelle ou de synthèse), encore appelée charge "blanche" ou parfois charge "claire" par opposition au noir de carbone, capable de renforcer à elle seule, sans autre moyen qu'un agent de couplage intermédiaire, une composition de caoutchouc destinée à la fabrication d'une bande de roulement de pneumatiques, en d'autres termes apte à remplacer, dans sa fonction de renforcement, un noir de carbone conventionnel de grade pneumatique pour bande de roulement ; une telle charge se caractérise généralement, de manière connue, par la présence de groupes hydroxyle (-OH) à sa surface.

Préférentiellement, la charge inorganique renforçante est une charge du type siliceuse, telle que silice (SiO₂) par exemple, ou alumineuse telle qu'alumine (Al₂O₃). On pourra utiliser avantageusement toute silice renforçante connue de l'homme du métier, notamment une silice précipitée du type hautement dispersible (dite "HDS") ayant préférentiellement une surface spécifique BET comprise entre 60 et 350 m²/g. De préférence, le taux de charge inorganique renforçante est supérieur à 50 pce, en particulier compris entre 60 et 140 pce, plus préférentiellement encore compris dans un domaine allant de 70 à 130 pce notamment lorsque la bande de roulement est destinée à un pneumatique tourisme.

Les agents de couplage (charge inorganique - élastomère diénique) sont bien connus de l'homme du métier. On peut utiliser tout agent de couplage susceptible d'assurer efficacement, dans les compositions de caoutchouc utilisables pour la fabrication de bandes de roulement de pneumatiques, la liaison entre une charge inorganique renforçante telle que silice et un élastomère diénique, en particulier des organosilanes ou des polyorganosiloxanes au moins bifonctionnels. On utilise à titre d'exemple un polysulfure de bis-hydroxysilylpropyle ou de bis-alkoxyl(C₁-C₄)silylpropyle comme par exemple le le tétrasulfure de bis(3-triéthoxysilylpropyl), en abrégé TESPT. La teneur en agent de couplage est préférentiellement comprise entre 4 et 12 pce, plus préférentiellement comprise entre 3 et 8 pce.

Lorsque le mélange de base (ou bien le mélange de recouvrement) comporte une charge inorganique renforçante, on préfère utiliser une faible quantité de noir de carbone, préférentiellement comprise dans un domaine de 5 à 20 pce, plus préférentiellement encore dans un domaine de 5 à 10 pce ; dans les intervalles indiqués, on bénéficie des propriétés spécifiques du noir de carbone (pigmentation et anti-UV), sans pénaliser par ailleurs les performances typiques apportées par la charge inorganique renforçante (résistance au roulement diminuée, adhérence améliorée).

Outre les constituants de base précédemment décrits, mélange de base et mélange de recouvrement comportent en outre tout ou partie des additifs usuels employés dans les compositions de caoutchouc destinées à la fabrication de bandes de roulement, comme par exemple des plastifiants ou des huiles d'extension, que ces derniers soient de nature aromatique (notamment des huiles très faiblement aromatiques des types "MES" ou "TDAE") ou de nature non-aromatique, des pigments, des agents de protection tels que cires anti-ozone, anti-ozonants chimiques, anti-oxydants, des agents anti-fatigue, des résines renforçantes ou plastifiantes, un système de réticulation à base soit de soufre, soit de donneurs de soufre et/ou de peroxyde et/ou de bismaléimides, des accélérateurs de vulcanisation, des activateurs de vulcanisation. Ces compositions peuvent également contenir, en complément des agents de couplage, des activateurs de couplage ou des agents de recouvrement de la charge inorganique renforçante.

Parmi les acides gras ci-dessus, sont plus préférentiellement choisis les acides en C₁₈ (acide oléique, acide linoléique, acide linolénique, ou un mélange de ces acides). Les fonctions alcools dont dérivent de tels esters sont par ailleurs connues, on citera par exemple le butanol, l'hexanol, l'octanol, l'éthylène glycol, les diols tels que le butanediol ou les triols tels que le glycérol.

De préférence, l'acide gras utilisé, qu'il soit d'origine synthétique ou naturelle, est constitué pour plus de 50% en poids, plus préférentiellement encore pour plus de 80% en poids d'acide oléique.

On utilise plus préférentiellement des triesters d'acides gras, notament les triesters de glycérol, en particulier le trioléate de glycérol dérivé de l'acide oléique et du glycérol, à un taux préférentiel compris entre 15 et 30 pce. Parmi les trioléates de glycérol préférentiels, on citera notamment comme exemples de composés naturels les huiles végétales de tournesol ou de colza à fort taux d'acide oléique (ayant de préférence plus de 50%, plus préférentiellement plus de 80% en poids d'acide oléique).

Sont également avantageusement utilisables, seules ou en combinaison avec les esters décrits ci-dessus, des résines plastifiantes hydrocarbonées, notamment celles décrites par exemple dans la demande WO 02/072688, selon une quantité de préférence comprise dans un domaine de 5 à 35 pce.

Préférentiellement, l'épaisseur totale de mélange de recouvrement sur des faces latérales recouvertes et opposées d'un même élément de relief est au plus égale à 50% de la distance moyenne séparant lesdites faces latérales ; par faces latérales opposées d'un même élément de relief, on entend des faces latérales sensiblement de même direction.

Préférentiellement, et pour avoir un effet perceptible dès l'état initial sur une bande de roulement neuve, le mélange de recouvrement d'au moins une face est disposé à partir de la face de contact.

Préférentiellement, l'épaisseur de mélange de recouvrement est supérieure à 0.1 mm sur au moins 80% de la hauteur Hr. Préférentiellement, l'épaisseur de mélange de recouvrement est au moins égale à 0.2 mm et au plus égale à 3 mm, sur au moins 80% de la hauteur Hr, et encore plus avantageusement comprise entre 0.2 mm et 2 mm, sur au moins 80% de la hauteur Hr.

Par distance moyenne séparant deux faces latérales opposées, on entend la moyenne des distances séparant lesdites faces latérales, ces distances étant mesurées perpendiculairement auxdites faces latérales considérées.

Par épaisseur moyenne de mélange de recouvrement sur une face, on entend la moyenne des épaisseurs maximale et minimale de mélange de recouvrement, étant entendu que ces épaisseurs sont mesurées sur la bande de roulement à l'état initial perpendiculairement à la face considérée.

Par distance moyenne séparant une découpure (rainure, incision) considérée de sa plus proche découpure qui lui est sensiblement parallèle, on entend la moyenne des distances maximale et minimale séparant lesdites découpures.

La bande de roulement selon l'invention permet de manière surprenante d'obtenir un bon équilibre entre la performance d'usure sur sol sec et la performance d'adhérence sur sol mouillé. En effet, s'il était connu, pour obtenir une bande de roulement performante sur sol enneigé, de former des éléments de relief dans un premier mélange de base et de recouvrir les faces latérales de ces éléments avec une couche de faible épaisseur dans un mélange ayant une température de transition vitreuse moyenne Tg inférieure à celle du mélange de base (voir par exemple le brevet US 5 840 137), aucun document ne décrivait ni ne suggérait la solution proposée.

Le matériau de recouvrement peut être disposé sur des faces latérales d'éléments de relief en vis-à-vis et délimitant une même découpure en recouvrant ou non le fond de ladite découpure.

Avantageusement, toutes les faces latérales des éléments de reliefs délimitant des rainures d'orientation générale circonférentielle sont pourvues d'un mélange de recouvrement comportant un caoutchouc butyl (à un taux de préférence supérieur à 15 pce, plus préférentiellement supérieur à 30 pce) afin d'améliorer très sensiblement les performances en régime de virage (sous sollicitations transversales) sur sol mouillé ou rendu glissant. Bien entendu, on peut employer, selon par exemple l'orientation des rainures d'une même bande de roulement, différents mélanges de recouvrement en combinaison avec un mélange de base (voire même plusieurs mélanges de base) ; dans ce cas, chaque mélange de recouvrement comporte un caoutchouc butyl aux taux préférentiels indiqués supra, et chaque mélange de base qui lui est directement adjacent est préférentiellement dépourvu de caoutchouc butyl.

On sait que pour différentes raisons, et en particulier à cause de l'évolution des propriétés du matériau avec l'usage et le temps, le niveau d'adhérence sur sol mouillé du pneumatique peut diminuer progressivement, quand bien même le matériau est homogène initialement dans l'épaisseur de la bande de roulement. Pour pallier cet inconvénient, il est intéressant, en combinaison avec les dispositions de l'invention, de prévoir la présence d'un deuxième mélange de base plus adhérent sur sol mouillé que le premier mélange de base et dont la disposition au sein des éléments de relief est telle que ce deuxième mélange apparaît progressivement en largeur sur la face de contact desdits éléments, ou plus généralement apparaît progressivement sur la largeur de la surface de roulement de la bande de roulement au fur et à mesure de l'usure de cette bande. Selon une autre variante avantageuse, le deuxième mélange peut être identique au mélange de recouvrement.

L'invention a également pour objet l'utilisation d'une telle bande de roulement pour la fabrication de pneumatiques neufs ou le rechapage des pneumatiques usagés.

L'invention a également pour objet ces pneumatiques eux-mêmes lorsqu'ils comportent une bande de roulement conforme à l'invention.

D'autres caractéristiques et avantages de la présente invention ressortent de la description faite ci-après en référence aux dessins annexés, sur lesquels :
- la figure 1 représente une vue partielle en plan d'une sculpture à blocs d'une bande de roulement ;
- la figure 2 montre les blocs de la figure 1 en coupe transversale selon la ligne de coupe II-II.

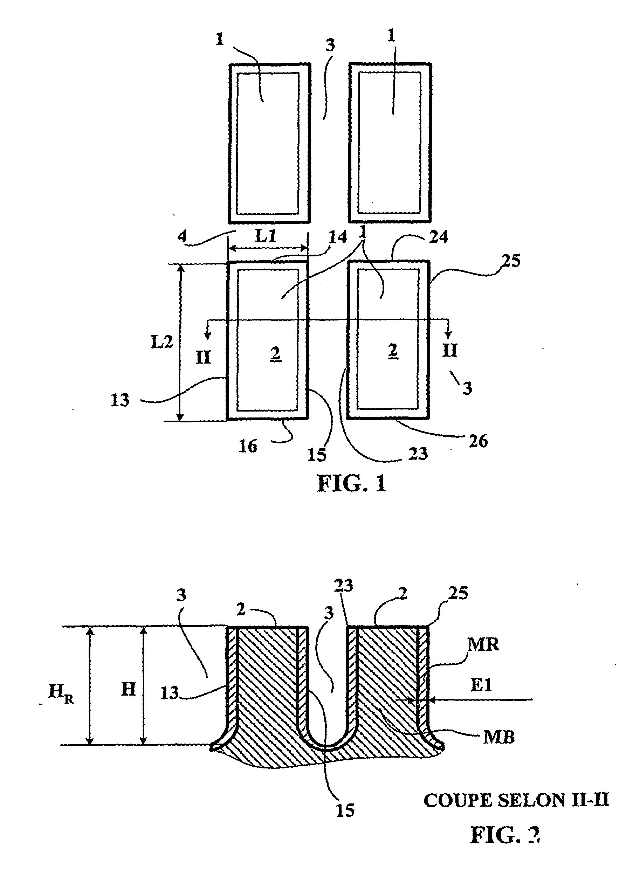

Sur la figure 1, on distingue des faces de contact 2 de blocs 1 de forme rectangulaire d'une sculpture de bande de roulement selon l'invention, lesdits blocs 1 étant délimités par des rainures d'orientation longitudinale 3 et transversale 4. Chacun de ces blocs 1 comporte quatre faces latérales 13, 14, 15, 16 dont les intersections avec la face de contact 2 forment, respectivement, des arêtes 23, 24, 25, 26 qui jouent un rôle important en roulage et en particulier sur chaussée rendue glissante (notamment par la présence d'eau). Chaque bloc 1 est de forme rectangulaire de largeur L1 et de longueur L2 (la direction de la longueur L1 des blocs étant dans le cas décrit confondue avec la direction longitudinale de la bande de roulement ou encore la direction circonférentielle sur le pneumatique pourvu de ladite bande.

Les quatre faces latérales 13, 14, 15, 16 sont recouvertes en totalité avec une épaisseur E1 (visible sur la figure 2) sensiblement constante (sur toute la hauteur Hr de recouvrement, dans le cas présent égale à la profondeur H des rainures) d'une composition de caoutchouc de recouvrement MR différente d'une composition de caoutchouc MB (dite composition de base dans ce qui suit) en ce que la composition de caoutchouc de recouvrement MR comporte du butyl et en ce que la composition de caoutchouc de base MB en est dépourvue.

Sur la coupe transversale représentée à la figure 2 et réalisée selon la ligne II-II de la figure 1 et perpendiculaire aux faces de contact 2 de deux blocs 1, on distingue aisément la présence en surface de la composition de caoutchouc de recouvrement MR sur les faces latérales 13 et 15 limitant les rainures d'orientation longitudinale 3.

L'épaisseur moyenne E1 du recouvrement MR des faces latérales est inférieure à la demi largeur totale L1 des blocs et préférentiellement inférieure à 30% de L1. Préférentiellement, les sommes des épaisseurs des recouvrements de deux faces latérales opposées dans la direction de la largeur (13, 15) et dans celle de la longueur (14, 16) sont respectivement inférieures à 50% de la largeur L1 et à 50% de la longueur L2.

Bien que l'effet technique de l'invention puisse être obtenu de manière surprenante avec de faibles épaisseurs de recouvrement (par exemple, inférieure ou égale à 0.1 mm), il est préférable pour obtenir un effet sensible et durable dans le temps, que cette épaisseur moyenne soit au moins égale à 0.2 mm dans le cas d'une sculpture destinée à une bande de roulement d'un pneumatique pour véhicule de tourisme.

On donne dans le tableau annexé (taux des différents produits exprimés en pce) deux exemples de compositions de caoutchouc utilisables, respectivement, comme mélange de base MB (composition C-1) et mélange de recouvrement MR (composition C-2). Il s'agit de deux compositions renforcées majoritairement par de la silice et comportant une faible quantité de noir de carbone, préparées selon des techniques conventionnelles bien connues de l'homme du métier qui ne sont pas décrites ici dans un souci de simplification de l'exposé.

Le mélange de base comporte deux élastomères diéniques SBR et BR connus, il est classiquement utilisé dans les pneus dits "verts" à faible consommation d'énergie. Le mélange de recouvrement comporte 50 pce de caoutchouc butyl auxquels sont associés 50 pce d'un SBR de même structure que le précédent, mais dépourvu d'huile aromatique. La composition C-2 a pour caractéristique de ne comporter aucune huile aromatique, cette dernière étant totalement remplacée (à raison de 33 pce) par un ester d'acide gras (trioléate de glycérol) et une résine hydrocarbonée associée.

Les compositions C-1 et C-2 précédemment décrites ont été utilisées dans des bandes de roulement de pneumatiques tourisme à carcasse radiale notés respectivement P-1 et P-2, de dimension 195/65 R 15 (indice de vitesse H), conventionnellement fabriqués et en tous points identiques hormis les compositions de caoutchouc constitutives de la bande de roulement.

La composition C-1 forme l'intégralité de la bande de roulement des pneumatiques P-1 (pneumatiques de référence) ainsi que le mélange de base de la bande de roulement des pneumatiques P-2 conformes à l'invention, tandis que la composition C-2 constitue le mélange de recouvrement des pneumatiques P-2 selon l'invention. Ce mélange de recouvrement a une épaisseur de l'ordre de 1,0 mm sur au moins 80% de la hauteur Hr de toutes les faces latérales de tous les éléments de relief de la sculpture de la bande de roulement des pneumatiques P-2. Les pneumatiques P-2 reprennent sensiblement la structure décrite avec le support des figures 1 et 2.

Tous les pneumatiques ont été ensuite montés à l'avant d'un véhicule automobile (Renault modèle Laguna - pression avant et arrière de 2,0 bars) équipé d'un système de freinage ABS, pour être soumis à un test de freinage sur route mouillée consistant à mesurer la distance nécessaire pour passer de 50 km/h à 10 km/h lors d'un freinage brutal sur un sol arrosé (béton bitumineux).

Dans les conditions énoncées ci-dessus, on a constaté que la distance de freinage était réduite de 20% pour le véhicule équipé des pneumatiques P-2 selon l'invention, comparativement au même véhicule équipé de pneumatiques de référence P-1.

Ce résultat est d'autant plus inattendu et surprenant que la surface totale de mélange de recouvrement (composition C-2) en contact avec le sol mesurée sur une empreinte du pneumatique ne représente que 20% de la surface totale de la bande de roulement en contact avec le sol.

L'épaisseur E1 de mélange de revêtement MR peut être, comme c'est le cas ici, sensiblement uniforme sur toute la hauteur de la face H et comprise entre 0.2 mm et 3 mm et encore plus préférentiellement entre 0.2 mm et 2 mm pour un pneumatique de tourisme.

Comme variante, il est possible de recouvrir les faces latérales des éléments de relief avec des compositions de caoutchouc de recouvrement différentes selon les faces latérales concernées tout en respectant la présence de caoutchouc butyl dans lesdites compositions (de même, les épaisseurs moyennes peuvent être différentes selon la face considérée).

Un moyen d'obtention d'une telle sculpture de bande de roulement consiste par exemple à recouvrir une ébauche de bande de roulement réalisée dans un mélange de base avec une couche de mélange de recouvrement d'épaisseur appropriée avant de procéder au moulage de la bande de roulement et des rainures et des incisions. Après moulage, le mélange de recouvrement se trouvant sur la face de contact de la nervure peut être laissé en place ou bien éliminé par un moyen mécanique (notamment par un meulage).

La réalisation industrielle d'une bande de roulement selon l'invention peut consister à déposer, sur l'ébauche de pneumatique non vulcanisé pourvue d'une bande de roulement en mélange de base non vulcanisé, des bandelettes de mélange différent du mélange de base, comme cela est décrit dans le document de brevet EP 0510550 (les bandelettes pouvant être déposées dans la direction circonférentielle et/ou transversale sur la bande de roulement). Une autre manière peut consister à réaliser la bande de roulement par co-extrusion de deux mélanges (ou plus) au moment de l'extrusion de la bande de roulement.

L'invention appliquée dans ce qui vient d'être décrit pour une bande de roulement de pneumatique peut être aussi avantageusement appliquée à d'autres domaines comme celui des chenilles ou encore celui des chaussures et notamment celui des chaussures pour la pratique d'un sport.

**Tableau**

| Composition N°: | C-1 | C-2 |
|---|---|---|
| | (MB) | (MR) |
| SBR (1) | 70 | - |
| BR (2) | 30 | - |
| SBR (3) | - | 50 |
| IIR (4) | - | 50 |
| noir de carbone (5) | 6 | 6 |
| silice (6) | 80 | 80 |
| agent de couplage (7) | 6.4 | 6.4 |
| huile aromatique (8) | 33.0 | - |
| plastifiant (9) | - | 17.0 |
| plastifiant (10) | - | 16.0 |
| DPG (11) | 1.5 | 1.5 |
| ZnO | 2.5 | 2.5 |
| acide stéarique | 2 | 2 |
| cire anti-ozone | 1.5 | 1.5 |
| antioxydant (12) | 1.9 | 1.9 |
| soufre | 1.1 | 1.1 |
| accélérateur (13) | 2.0 | 2.0 |

| | | |
|---|---|---|
| (1) SBR (exprimé en SBR sec) étendu avec 18% en poids (12.6 pce) d'huile (soit au total 82.6 pce de SBR étendu) ; 25% de styrène, 58% de motifs polybutadiène 1-2 et 23% de motifs polybutadiène 1-4 trans (Tg = -24°C) ; (2) BR avec 4,3% de 1-2; 2,7% de trans ; 93% de cis 1-4 (Tg = -106°C); (3) SBR (SBR sec) ; 25% de styrène, 58% de motifs polybutadiène 1-2 et 23% de motifs polybutadiène 1-4 trans (Tg = -24°C) ; (4) Caoutchouc butyl bromé (BIIR - "EB2222" de la société Exxon) ; (5) noir de carbone N234 ; (6) silice "Zeosil 1165MP" de la société Rhodia, type "HDS" (BET et CTAB : environ 160 m²/g); (7) agent de couplage TESPT ("Si69" de la société Degussa); (8) huile aromatique totale (y compris huile d'extension du SBR); (9) trioléate de glycérol (huile de tournesol à 85% en poids d'acide oléique - "Lubrirob Tod 1880" de la société Novance); (10) résine hydrocarbonée plastifiante à haute Tg ("R2495" société Hercules); (11) diphénylguanidine (Perkacit DPG de la société Flexsys); (12) N-1,3-diméthylbutyl-N-phénylparaphénylènediamine (Santoflex 6-PPD de la société Flexsys); (13) N-cyclohexyl-2-benzothiazyl-sulfénamide (Santocure CBS de la société Flexsys - 1.8 pce) et dibenzyldithiocarbamate de zinc (Vulkacit ZBEC de Bayer - 0,2 pce). | | |

## Revendications

1. - Bande de roulement en caoutchouc notamment pour pneumatique comprenant :
• une pluralité d'éléments de relief (1) comprenant des faces latérales (13, 14, 15, 16) et une face de contact (2) destinée à être en contact suivant une surface avec la chaussée pendant le roulage d'un pneumatique pourvu de ladite bande, la limite de la surface de contact de la face de contact (2) avec le sol formant au moins une arête (23, 24, 25, 26),
• une pluralité de découpures (3, 4) sous la forme de rainure et/ou incision, lesdites découpures (3, 4) étant délimitées par des faces latérales (13, 15), (14,16) en vis-à-vis,
• chaque élément de sculpture (1) étant formé avec au moins un premier mélange de caoutchouc (dit "mélange de base"),
cette bande de roulement ayant, vue en coupe dans un plan contenant l'épaisseur de la bande, au moins une face délimitant au moins une découpure recouverte au moins en partie avec un deuxième mélange de caoutchouc, dit "mélange de recouvrement", cette partie en mélange de recouvrement s'étendant à l'état neuf sur une hauteur Hr au moins égale à 30% de la hauteur H de la face, au moins un premier mélange de base débouchant sur la face de contact à l'état neuf ou au plus tard après une usure au plus égale à 10% de la hauteur Hr, cette bande de roulement étant **caractérisée en ce que** le mélange de recouvrement comporte un caoutchouc butyl, et **en ce que** le mélange de recouvrement comporte un plastifiant du type ester d'acide gras insaturé en C₁₂-C₂₂.

2. °- Bande de roulement selon la revendication 1, **caractérisée en ce que** le taux d'ester est compris entre 5 et 80 pce, de préférence entre 10 et 50 pce.

3. - Bande de roulement selon l'une des revendications 1 ou 2, **caractérisée en ce que** l'ester d'acide gras est un trioléate de glycérol.

4. - Bande de roulement selon le revendication 3, **caractérisée en ce que** le taux de trioléate de glycérol est compris entre 15 et 30 pce.

5. - Bande de roulement selon l'une des revendications 1 à 4 **caractérisée en ce que** le mélange de recouvrement comporte plus de 15 pce, de préférence plus de 30 pce (parties en poids pour cent parties d'élastomère) de caoutchouc butyl.

6. - Bande de roulement selon la revendication 5 **caractérisée en ce que** le mélange de recouvrement comporte de 50 à 100 pce de caoutchouc butyl.

7. - Bande de roulement selon l'une des revendications 1 à 6, **caractérisée en ce que** le mélange de base est dépourvu de caoutchouc butyl.

8. - Utilisation d'une bande de roulement conforme à l'une quelconque des revendications 1 à 7, pour la fabrication ou le rechapage de pneumatiques.

9. - Pneumatique comportant une bande de roulement conforme à l'une quelconque des revendications 1 à 7.

## Claims

1. - A rubber tread in particular for tyres, comprising:
• a plurality of elements in relief (1) comprising lateral faces (13, 14, 15, 16) and one contact face (2) intended to be in contact along a surface with the roadway during travel of a tyre provided with said tread, the limit of the surface of contact of the contact face (2) with the ground forming at least one ridge (23, 24, 25, 26),
• a plurality of cutouts (3, 4) in the form of grooves and/or incisions, said cutouts (3, 4) being defined by facing lateral faces (13, 15), (14, 16),
• each tread pattern element (1) being formed with at least one first rubber mix (referred to as "base mix"),
this tread having, viewed in section in a plane containing the thickness of the tread, at least one face defining at least one cutout covered at least in part with a second rubber mix, referred to as "covering mix", this part consisting of covering mix extending when new over a height Hr at least equal to 30% of the height H of the face, at least one first base mix opening on to the contact face when new or at the latest after wear at most equal to 10% of the height Hr, this tread being **characterised in that** the covering mix comprises a butyl rubber, and **in that** the covering mix comprises a plasticiser of the unsaturated C₁₂-C₂₂ fatty acid ester type.

2. - A tread according to Claim 1, **characterised in that** the amount of ester is between 5 and 80 phr, preferably between 10 and 50 phr.

3. - A tread according to one of Claims 1 or 2, **characterised in that** the fatty acid ester is a glycerol trioleate.

4. - A tread according to Claim 3, **characterised in that** the amount of glycerol trioleate is between 15 and 30 phr.

5. - A tread according to one of Claims 1 to 4, **characterised in that** the covering mix comprises more than 15 phr, preferably more than 30 phr (parts by weight per hundred parts of elastomer) of butyl rubber.

6. - A tread according to Claim 5, **characterised in that** the covering mix comprises from 50 to 100 phr of butyl rubber.

7. - A tread according to one of Claims 1 to 6, **characterised in that** the base mix is devoid of butyl rubber.

8. - The use of a tread according to any one of Claims 1 to 7 for the manufacture or retreading of tyres.

9. - A tyre comprising a tread according to any one of Claims 1 to 7.

## Patentansprüche

1. Laufstreifen aus Kautschuk, insbesondere für Luftreifen, der umfasst:
• eine Vielzahl von Reliefelementen (1), die Seitenflächen (13, 14, 15, 16) und eine Kontaktfläche (2) umfassen, die dafür vorgesehen ist, im Rollbetrieb eines Luftreifens, der mit diesem Laufstreifen ausgerüstet ist, über eine Oberfläche mit der Fahrbahn im Kontakt zu stehen, wobei die Begrenzung der Kontaktoberfläche der Kontaktfläche (2) mit dem Untergrund mindestens eine Kante (23, 24, 25, 26) bildet,
• eine Vielzahl von Vertiefungen (3, 4) mit der Form von Rillen und/oder Einschnitten, wobei die Vertiefungen (3, 4) durch einander gegenüberliegende Seitenflächen (13, 15), (14, 16) begrenzt sind,
• wobei jedes Profilelement (1) mit mindestens einer ersten Kautschukmischung (die als "Basismischung" bezeichnet wird) erzeugt wird,
wobei dieser Laufstreifen, im Schnitt in einer Ebene betrachtet, die die Dicke des Laufstreifens einschließt, mindestens eine Fläche aufweist, die mindestens eine Vertiefung begrenzt, die mindestens teilweise mit einer zweiten Kautschukmischung überzogen ist, die als "Überzugsmischung" bezeichnet wird, wobei sich dieser Teil aus der Überzugsmischung im neuwertigen Zustand über eine Höhe Hr von mindestens 30 % der Höhe H der Fläche erstreckt, wobei mindestens eine erste Basismischung im neuwertigen Zustand oder spätestens nach einem Abrieb von höchstens 10 % der Höhe Hr an der Kontaktfläche zum Vorschein kommt, wobei dieser Laufstreifen **dadurch gekennzeichnet ist, dass** die Überzugsmischung einen Butylkautschuk enthält und dass die Überzugsmischung einen Weichmacher vom Typ der Ester einer ungesättigten C₁₂₋₂₂-Fettsäure enthält.

2. Laufstreifen nach Anspruch 1, **dadurch gekennzeichnet, dass** der Mengenanteil des Esters im Bereich von 5 bis 80 pce und vorzugsweise im Bereich von 10 bis 50 pce liegt.

3. Laufstreifen nach einem der Ansprüche 1 und 2, **dadurch gekennzeichnet, dass** es sich bei dem Fettsäureester um ein Glycerintrioleat handelt.

4. Laufstreifen nach Anspruch 3, **dadurch gekennzeichnet, dass** der Mengenanteil des Glycerintrioleats im Bereich von 15 bis 30 pce liegt.

5. Laufstreifen nach einem der Ansprüche 1 bis 4, **dadurch gekennzeichnet, dass** die Überzugsmischung mehr als 15 pce und vorzugsweise mehr als 30 pce (Gewichtsteile pro 100 Teile Elastomer) Butylkautschuk enthält.

6. Laufstreifen nach Anspruch 5, **dadurch gekennzeichnet, dass** die Überzugsmischung 50 bis 100 pce Butylkautschuk enthält.

7. Laufstreifen nach einem der Ansprüche 1 bis 6, **dadurch gekennzeichnet dass** die Basismischung keinen Butylkautschuk enthält.

8. Verwendung eines Laufstreifens nach einem der Ansprüche 1 bis 7 für die Herstellung oder Runderneuerung von Luftreifen.

9. Luftreifen, der einen Laufstreifen nach einem der Ansprüche 1 bis 7 enthält.
